# EUROPÄISCHE PATENTANMELDUNG

(11) **EP 1 291 569 A1**
(43) Veröffentlichungstag der Anmeldung: **12.03.2003**
(21) Anmeldenummer: 01120741.2
(22) Anmeldetag: 06.09.2001
(51) Int. Cl.: F16L 33/207, F16L 33/22

(54) **Verfahren, Anordnung und Greifglied zum Befestigen eines Rohres an einem Bauteil**

(71) Anmelder: F. X. Bachmann AG, 1700 Fribourg (CH)
(72) Erfinder: Bachmann, Franz, Xaver, 6304 Zug (CH)
(74) Vertreter: Blum, Rudolf Emil Ernst

(57) **Zusammenfassung**

Zur Befestigung eines Rohres (1) an einem Bauteil (2) wird ein Stutzen (3) des Bauteiles mit Übermass in das Rohr eingepresst. Die Einpressung wird durch eine Kraft am Bauteil (2) und einem Greifglied (4) ausgeübt, wobei das Greifglied das Rohr (1) mittels Arretiergliedern (8) festhält, so dass der Stutzen (3) in das Rohr eingeschoben werden kann. Die Aufweitung und das nachfolgende Zusammenziehen des Kunststoffrohres bewirken eine gute Abdichtung der Verbindung mit einfachen Mitteln.

## Beschreibung

Die Erfindung betrifft ein Verfahren zum Befestigen eines Rohres an einem Bauteil gemäss Oberbegriff des Anspruchs 1. Ferner betrifft die Erfindung eine Verbindungsanordnung gemäss Oberbegriff des Anspruchs 6 sowie ein Greifglied gemäss Anspruch 10.

Es besteht das Bedürfnis, dauerhafte Verbindungen von Rohren mit anderen Bauteilen zu schaffen, so insbesondere bei Sanitärinstallationen, Heizungsinstallationen und Gasinstallationen. Bei den Bauteilen kann es sich um beliebige Bauteile bekannter Art, wie Kupplungen, T-Stücke, Verteiler, Armaturen usw. handeln. Für die Befestigung von Kunststoffrohren und Kunststoff-Verbundrohren an solchen Bauteilen ist es schon vorgeschlagen worden, das Rohr an seinem Ende durch ein Spezialwerkzeug aufzuweiten und in das aufgeweitete Ende einen Stutzen des Bauteils einzuführen, was aufgrund der Aufweitung durch einfaches Einschieben möglich ist. Da die genannten Rohre das Bestreben haben, ihren ursprünglichen Durchmesser wieder anzunehmen (Memory-Effekt) legen sie sich an den eingeführten Stutzen an, der ein leichtes Übermass im Vergleich mit dem unaufgeweiteten Rohrinnendurchmesser aufweist. Diese Verbindungsart ist indes aufwändig, da ein Spezialwerkzeug zum Aufweiten des Rohres notwendig ist.

Es sind ferner Pressverbindungen bekannt, bei denen ein Stutzen ohne Übermass in das Rohrende eingeführt wird und danach von aussen eine Presskraft auf das Rohr ausgeübt wird, z.B. gemäss WO 85/00646 oder EP-A-1-020 675. Auf diese Weise sind direkte Verbindungen erzielbar, indes wird eine Zugkraft auf das Rohr an der Verbindungsstelle nur von der Rohrinnenwandung aufgenommen, was bei Verbundrohren problematisch sein kann.

Der Erfindung liegt die Aufgabe zugrunde, eine Verbindungsmöglichkeit für Rohre, insbesondere Kunststoff- oder Kunststoffverbundrohre, zu schaffen, die diese Nachteile nicht oder in vermindertem Masse aufweist.

Diese Aufgabe wird beim Verfahren bzw. bei der Anordnung und dem Greifglied der eingangs genannten Art durch die Merkmale der unabhängigen Ansprüche gelöst.

Dadurch, dass die Pressverbindung durch Aufweitung mittels des Stutzens selber erfolgt, kann auf aufwändiges Spezialwerkzeug verzichtet werden; das bei der Einpressung des Stutzens das Rohr haltende, permanent am Rohr angeordnete Greifglied kann ferner bei der fertigen Verbindung eine Übertragung von Zugkräften auf die Rohraussenschicht von Verbundrohren bewirken, was bei diesen die Innenschicht (Inliner) entlasten kann.

Besonders bevorzugt ist es, wenn das Greifglied derart ausgestaltet ist, dass zusätzlich zur Verbindung durch Aufweitung und Zusammenziehen des Rohres, bzw. den Memory-Effekt, eine Verpressung von der Aussenseite her erfolgt.

Im folgenden werden Ausführungsbeispiele der Erfindung anhand der Zeichnungen näher erläutert. Dabei zeigt
Figur 1 eine geschnittene Teilansicht einer Verbindung vor der Verpressung;
Figur 2 eine Draufsicht auf einen Teil des Greifgliedes der Verbindung von Figur 1;
Figur 3 einen Schnitt entlang der Linie A-A von Figur 2;
Figur 4 einen Schnitt entlang der Linie B-B von Figur 2;
Figur 5 eine Ansicht auf den Ring des Greifgliedes von Figur 1 in Ansichtsrichtung A;
Figur 6 eine Schnittdarstellung gemäss Figur 1 der fertiggestellten Verbindung;
Figur 7 ein weiteres Ausführungsbeispiel in geschnittener Teildarstellung vor der Verbindung;
Figur 8 das Beispiel von Figur 7 nach erfolgter Verbindung;
Figur 9 ein weiteres Ausführungsbeispiel in geschnittener Teildarstellung während der Verbindung.

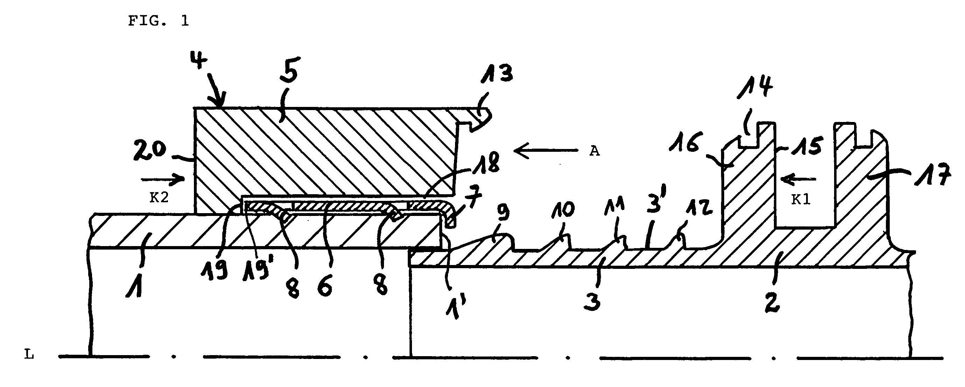

Figur 1 zeigt ein Ausführungsbeispiel einer Rohrverbindung gemäss der Erfindung in geschnittener, teilweiser Darstellung. Gezeigt sind dabei nur die oberhalb der Längsmittelachse L liegenden Teile zur Vereinfachung der Darstellung. Die Verbindung dient zur Befestigung eines Rohres 1 an einem Bauteil 2. Beim Rohr 1 handelt es sich um ein Rohr, wie es bei Sanitär-, Heizungs- und Gasinstallationen verwendet wird. Das Rohr 1 ist dabei ein Kunststoffrohr, bevorzugterweise ein handelsübliches Mehrschicht-Verbundrohr. Solche Rohre weisen einen mehrschichtigen Aufbau auf, so z.B. eine innere Schicht (Inliner) aus vernetztem Polyethylen (PEX) eine weiter aussen liegende Schicht z.B. aus Aluminium und eine äussere Schicht wiederum aus Kunststoff. Dieser Aufbau ist indes lediglich als Beispiel zu verstehen. In den Figuren ist das Rohr 1 jeweils als einschichtiges Rohr dargestellt, um die Zeichnung zu vereinfachen. Die Verbindung gemäss der vorliegenden Erfindung eignet sich indes auch gut für solche einschichtigen Rohre (Monorohre) aus Kunststoff. Gemeinsam ist diesen Rohren, dass sie nach einer Aufweitung einen sogenannten Memory-Effekt aufweisen, bzw. das Bestreben haben, wieder ihren ursprünglichen Durchmesser anzunehmen. Die Erfindung befasst sich mit der Befestigung solcher Rohre an einem Bauteil 2 mit einem Stutzen 3. Das Bauteil 2 ist dabei ein beliebiges bekanntes Teil, z.B. ein Kupplungsteil zum Verbinden von Rohren, wie dies in den Figuren dargestellt ist, wobei nur eine teilweise Darstellung erfolgt und der zweite Stutzen zum Anschluss des weiteren Rohres nur angedeutet ist. Das Bauteil 2 kann aber eine beliebige Armatur, ein Verteiler oder ein sonstiges bekanntes Bauteil sein, an welchem das Rohr 1 angeschlossen werden muss.

Figur 1 zeigt nun ein erstes Ausführungsbeispiel, wobei das Rohr 1 in seiner Lage vor Einpressen des Stutzens 3 des Bauteiles 2 in das Rohr dargestellt ist. Gemäss dem erfindungsgemässen Verfahren wird ein Stutzen 3 in das Rohr eingepresst, welcher gegenüber dem Innendurchmesser des Rohres ein Übermass aufweist. In der Figur 1 ist der Stutzen so dargestellt, dass dessen Aussenwandung 3' im wesentlichen einen Aussendurchmesser aufweist, der dem Innendurchmesser des Rohres 1 entspricht. Das Übermass wird in diesem Fall durch Ausformungen 9,10,11 und 12 an der Aussenseite 3' des Stutzens gebildet. Diese um den Stutzenumfang umlaufenden Ausformungen sind in den Figuren zur besseren zeichnerischen Darstellung überhöht dargestellt. Als Beispiel kann angegeben werden, dass die Ausformungen bzw. Erhöhungen 9-12 z.B. 0,5 mm hoch sind, so dass sich eine Aufweitung des Rohres 1 um 1 mm ergibt, wenn die Erhöhungen 9-12 in das Rohr eingepresst werden. Dies z.B. bei einem Rohrdurchmesser von 20 mm. Natürlich ist die Anzahl und die Formgebung der Erhöhungen gemäss Figur 1 nur als Beispiel zu verstehen. Es könnten mehr oder weniger der Erhöhungen vorgesehen sein und deren Formgebung kann untereinander gleich oder wie gezeigt verschieden und auch mehr abgerundet als in Figur 1 sein. Weiter ist es auch möglich, dass bereits der Aussenmantel 3' ohne die Erhöhungen ein gewisses Übermass gegenüber dem Innendurchmesser des Rohres aufweist, so dass sich auch durch die Fläche 3' ein geringfügiges Aufweiten ergibt. Es ist in diesem Sinne auch möglich, ein Aufweiten nur durch die Oberfläche 3' zu erzielen, so dass also die Erhöhungen 9-12 weggelassen wären und der Stutzen 3 im wesentlichen ein einheitliches Übermass aufweist.

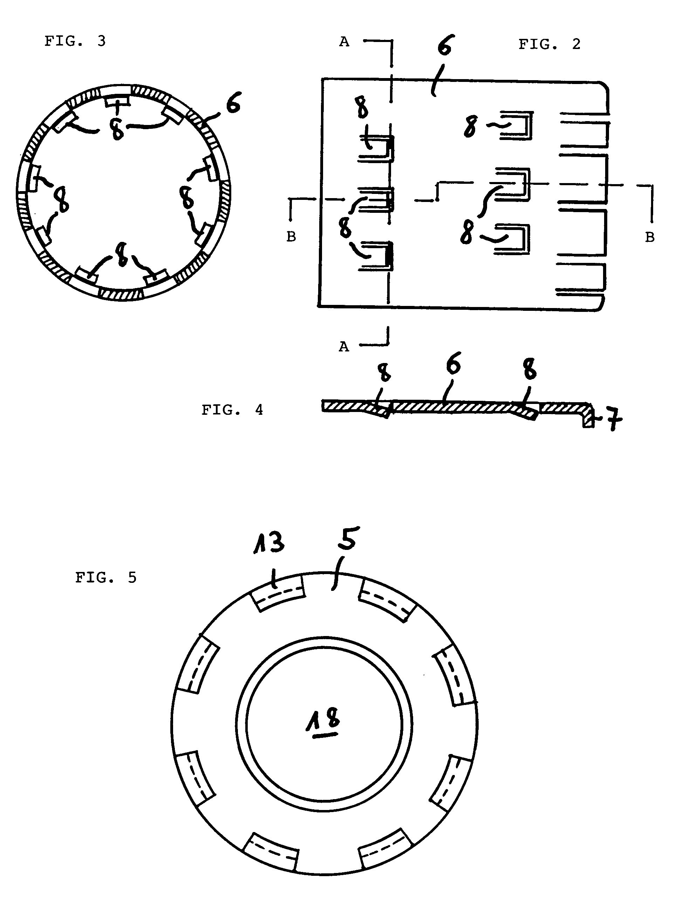

Zur Herstellung der gewünschten dichtenden Verbindung zwischen Rohr 1 und Bauteil 2 wird der Stutzen 3 in das Rohr eingepresst, wobei sich dieses aufweitet und aufgrund des Memory-Effektes sich anschliessend dichtend an den Stutzen anlegt. Zur Ermöglichung des Einpressens des Stutzens 3 in das Rohr ist ein Greifglied 4 vorgesehen, welches um das Rohrende aufgeschoben ist und das Rohr festhält, so dass durch Kraftausübung in Richtung der Pfeile K1 und K2 mittels eines Presswerkzeuges ein Einpressen des Stutzens 3 in das Rohr 1 unter Aufweitung desselben erfolgen kann. Beim Ausführungsbeispiel von Figur 1 ist das Greifglied 4 von einem Ring 5 und einer Hülse 6 gebildet. Die Hülse 6, welche vorzugsweise aus Metall besteht, weist dabei Arretiermittel 8 auf, die ein Festhalten der Hülse 6 am Rohr 1 bewirken, wenn das Rohr an seiner Stirnseite 1' über den Stutzen mit der Kraft K1 beaufschlagt wird und das Greifglied 4' mittels der Gegenkraft K2 festgehalten wird. Der Ring 5, der aus Metall oder Kunststoff bestehen kann, bildet dabei einen ringförmigen Hohlraum 18 für die Hülse 6, und einen Anschlag 19 für deren hinteres Ende 19'. Der Ring 5 dient dabei mit seiner hinteren Fläche 20 als Anschlag für das Presswerkzeug. Die Hülse 6 kann weiter mit einem vorderen Anschlag 7 versehen sein, der die Stirnseite 1' des Rohres teilweise übergreift. Figur 2 zeigt eine Draufsicht auf eine derartige Hülse aus Metall, mit den als nach innen abgebogenen Zungen 8 ausgebildeten Arretiermitteln. Die Figur 3 zeigt dabei einen Schnitt entlang der Linie A-A und die Figur 4 einen Schnitt entlang der Linie B-B durch die Hülse von Figur 2. Die Hülse 6 kann als umlaufend geschlossene, als teilweise geschlitzte oder als ganz geschlitzte Hülse ausgeführt sein und ist in der Regel zylindrisch, kann aber auch leicht konisch sein. Figur 5 zeigt weiter eine Ansicht auf den Ring 5 in Richtung des Pfeiles A von Figur 1.

Zur Herstellung der Verbindung von Rohr und Bauteil 1 wird zunächst der Ring 5 auf das Rohrende aufgeschoben und von der Stirnseite 1' weg nach hinten verschoben. Danach wird die Metallhülse 6 auf das Rohrende aufgesetzt, wobei diese einen Innendurchmesser aufweist, der im wesentlichen dem Aussendurchmesser des Rohres entspricht. Beim Aufschieben der Hülse 6 auf das Rohrende gleiten die Federzungen 8 über den Rohrmantel. Der Anschlag 7 ergibt eine definierte Endlage beim Aufschieben der Hülse 6 auf dem Rohrende. Danach wird der Ring 5 über die Hülse 6 geschoben, so dass sich die in Figur 1 gezeigte Lage von Hülse 6 und Ring 5 am Rohrende ergibt. Der Innendurchmesser der Ausnehmung 18 des Ringes 5 kann dabei so gewählt werden, dass sich beim Aufschieben des Ringes 5 über die Hülse 6 ein erstes Eingraben der Zungen 8 mit ihren Kanten in das Rohrmaterial ergibt. Das Rohr ist damit im Greifglied 4 arretiert, so dass es ohne Beschädigung des Greifgliedes oder des Rohres nicht mehr nach hinten (in Richtung des Pfeiles K1) aus dem Greifglied herausgezogen werden kann, bzw. dass das Greifglied nicht mehr nach vorne (in Richtung des Pfeiles K2) vom Rohrende wegziehbar ist. Vorzugsweise werden der Ring 5 und die Metallhülse 6 aber schon vormontiert, so dass im Hohlraum 18 die Hülse angeordnet ist. In diese vormontierte Einheit wird dann das Rohr eingeschoben.

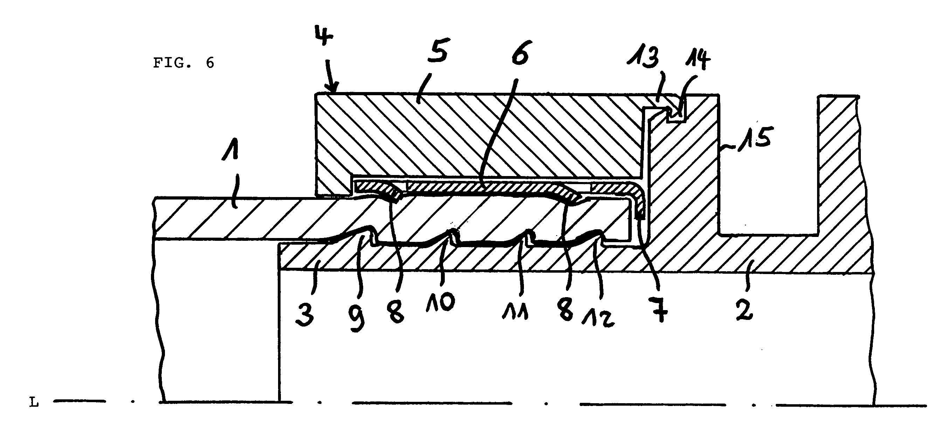

Es wird nun das Bauteil 2 mit seinem Stutzen 3 am Rohr angesetzt und mittels eines Presswerkzeuges wird die Kraft K1 bzw. die Gegenkraft K2 auf das Bauteil 2 bzw. das Greifglied 4 ausgeübt. Am Bauteil 2 ist dazu eine Fläche 15 am Flansch 16 desselben vorgesehen, am Greifglied 4 die erwähnte Fläche 20. Die Kraft wird rotationssymmetrisch zur Achse L ringsum gleichmässig, z.B. durch ein pneumatisches oder hydraulisches Werkzeug aufgebracht. Dadurch ergibt sich ein Hineinpressen des Übermassstutzens 3 in das Rohr 1 unter Aufweitung desselben. Figur 6 zeigt die entsprechende Endlage in ähnlicher Darstellung wie Figur 1, wobei der Stutzen 3 vollständig im Rohr 1 eingepresst worden ist und das Rohr durch die dabei erfahrene Aufweitung und das nachfolgende sich Zusammenziehen des Rohres dichtend am Stutzen 3 anliegt. Die Dichtigkeit der Verbindung wird dabei durch das entsprechende Anliegen des Rohres an den Erhebungen 9-12 erzielt. Das Greifglied 4 ist in der Endstellung bevorzugterweise mit Schnapphaken oder einem anderen Mittel 13 in Eingriff am Bauteil 2 (Nut 14), wodurch die Verbindung gegen unbeabsichtigtes Lösen gesichert ist. Das Greifglied 4 greift mit seinen Arretiermitteln 8 in die Aussenwand des Rohres ein, wodurch sich geringfügig ein weiterer Verpressungseffekt ergibt, wodurch sich aber insbesondere eine Zugsicherung gegen Zug am Rohr ergibt, die aussenseitig am Rohr ansetzt. Dies ist insbesondere vorteilhaft bei Verbundrohren, bei welchen die Arretiermittel vorzugsweise bis in die Metallschicht des Rohres eingegraben sind und dadurch eine wirksame Zugentlastung bewirken, die nicht auf die Innenschicht (Inliner) des Rohres wirkt. Natürlich sind eine Reihe von Abwandlungen des gezeigten Beispieles ohne weiteres möglich, so kann das Greifglied 4 anstelle seiner zweiteiligen Ausführung mit Ring 5 und Hülse 6 auch einstückig ausgeführt sein.

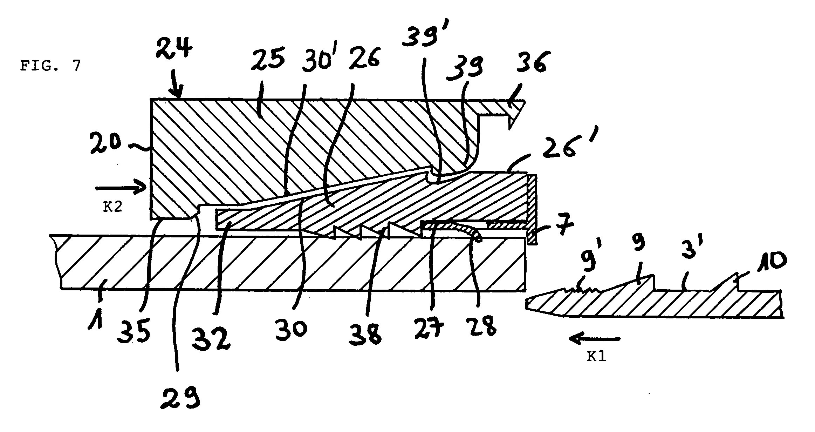

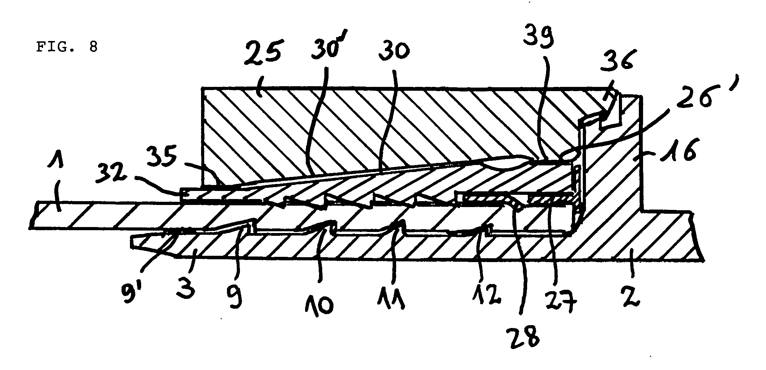

Figur 7 zeigt ein weiteres Ausführungsbeispiel, in welchem gleiche Bezugsziffern wiederum gleiche Elemente bezeichnen. Das Bauteil 2 ist hier nur noch mit seinem Stutzen 3 ersichtlich. Das Greifglied 24 ist hier dreiteilig aufgebaut und weist neben dem Ring 25 eine Hülse auf, die zweiteilig als Presshülse 26 und Arretierhülse 27 ausgeführt ist. Die Presshülse 26 weist eine konische Fläche 30 auf, welche einer entsprechenden Gegenfläche 30' des Ringes 25 gegenübersteht. Ring 25 und Presshülse 26 sind durch ein Haltemittel 39 und 39' aneinander befestigt. Die in der Presshülse 26 angeordnete Arretierhülse 27 besteht vorzugsweise aus Metall und weist wiederum Federzungen 28 als Arretiermittel für das Rohr 1 auf. Auch die Presshülse 26, welche ebenfalls aus Metall oder vorzugsweise aus Kunststoff besteht, kann Arretiermittel 38 für das Rohr aufweisen. Der Stutzen 3 weist ebenfalls wiederum Erhöhungen auf, von denen lediglich die Erhöhung 9 und 10 in der Figur ersichtlich sind. Weiter können kleinere Zähne 9' im vorderen Bereich des Stutzens angeordnet sein, was natürlich auch für den Stutzen von Figur 1 gilt. Zur Verbindung des Rohres 1 mit dem Bauteil 2 wird wiederum der Ring 25 über das Rohrende nach hinten geschoben. Danach wird die Hülse, umfassend die Presshülse 26 und die Arretierhülse 27, auf das Rohrende aufgesetzt. Die Hülse kann wiederum einen Anschlag 7 aufweisen, um das positionsrichtige Aufsetzen am Ende des Rohres zu erleichtern. Danach wird der Ring über die Presshülse geschoben, so dass sich die in Figur 7 dargestellte Stellung ergibt. Bei dieser graben sich wiederum die Arretiermittel 28 und auch 38 in das Rohrmaterial ein, so dass sich ein Festhalten des Rohres im Greifmittel 24 ergibt, wie dies anhand des vorherigen Beispiels erläutert worden ist. Durch Ausübung der Kraft K1 bzw. K2 ergibt sich wiederum ein Einschieben des Übermassstutzens in das Rohr 1, wodurch die Pressverbindung des Rohres am Stutzen 3 durch Aufweitung und Zusammenziehung des Rohres erfolgt. Die Haltemittel 39 und 39' zwischen Ring 25 und Presshülse 26 sind dabei so ausgestaltet, dass sich ein vollständiges Einschieben des Stutzens 3 in das Rohr ergibt, während Ring 25 und Presshülse 26 in der in Figur 7 gezeigten Stellung verbleiben. Dadurch ergibt sich zunächst ein Pressverbindung von innen gemäss derjenigen von Figur 6. Bei vollständig eingeschobenem Stutzen ist indes der Ring 25 noch nicht am Flansch 16 in Eingriff. Es wird nun nach dem vollständigen Einschieben des Stutzens 3 in das Rohr 1 weiter eine Kraft ausgeübt, die grösser ist als die Kraft K1 bzw. K2, wodurch sich ein Losbrechen der Verbindung 39, 39' zwischen Ring und Presshülse ergibt und der Ring 25 entlang der konischen Fläche 30 über die Presshülse 26 gedrückt wird. Dabei ergibt sich durch die Formgebung der Flächen 30 und 30' und auch 39 und 26' ein Quetschen der Presshülse 26 durch den Ring 25, welcher ebenfalls aus Metall oder Kunststoff bestehen kann, so dass durch die verquetschte Presshülse eine weitere Verpressung des Rohres her von aussen erfolgt, wie dies in Figur 8 ersichtlich ist. Der Ring 25 wird soweit über die Presshülse 26 geschoben, bis er sich mit seinem Schnappmittel 36 am Flansch 16 arretiert. Es ergibt sich also zusätzlich zu der Verpressung durch innere Aufweitung in diesem Ausführungsbeispiel eine Verpressung durch Quetschen des Rohres 1 durch die Presshülse 26 von aussen her. Die Arretiermittel 38 greifen dabei noch tiefer in das Rohrmaterial ein. Eine besondere Verpressung kann sich durch die Fläche 29 und 35 des Ringes 25 ergeben, welche über den Endbereich 32 der Presshülse hinausfährt. Vorzugsweise ragt das Ende 32 in der Endstellung gemäss Figur 8 über den Ring 25 hinaus, was einerseits eine optische Anzeige der korrekt erfolgten Verpressung ergibt und zweitens durch ein allfälliges geringfügiges Aufweiten des entlasteten Endes 32 eine weitere Arretierung gegen ein Lösen der Verbindung.

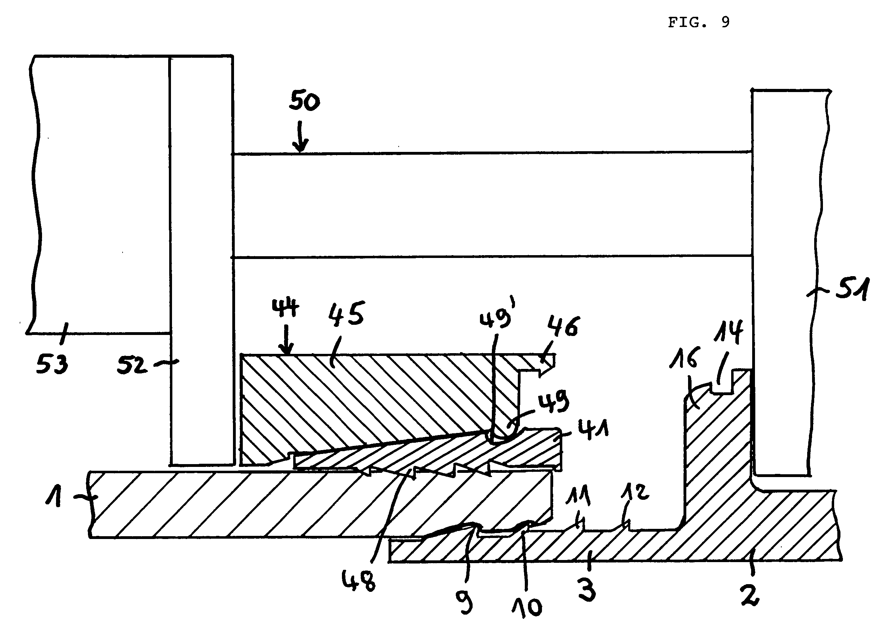

Figur 9 zeigt ein weiteres Beispiel, bei welchem wiederum gleiche Elemente mit den gleichen Bezugsziffern versehen sind. Das Bauteil 2 mit dem Stutzen 3 wird wiederum unter Aufweitung des Rohres in dieses hineingepresst, wobei Figur 9 eine Phase des Einpressvorganges zeigt, bei welchem bereits die Erhebungen 9 und 10 in das Rohr eingepresst worden sind. Das Greifglied 44 ist hier zweiteilig mit dem Ring 45 und der Hülse 41 ausgebildet. Die Hülse 41 trägt die Arretiermittel 48. In der gezeigten Lage von Ring 45 und Hülse 41 erfolgt das Aufpressen des Rohres 1 auf den Stutzen 3 bzw. dessen Einpressen in das Rohr mittels des nur schematisch angedeuteten Presswerkzeuges 50, welches Pressbacken 52 und 51 aufweist, welche an der Fläche 15 des Bauteils 2 angreifen und an der Hinterseite des Greifgliedes 44 bzw. des Ringes 45. Ein Antrieb 53 bringt die Presskraft auf. Der Ring 45 und die Hülse 41 sind wiederum über konische Flächen aufeinander liegend angeordnet und mit Haltemitteln 43 und 43' zum Einschieben des Stutzens miteinander verbunden. Wie im vorhergehenden Beispiel wird nach dem vollständigen Einschieben des Stutzens der Ring 45 weiter über die Hülse geschoben, wodurch auch hierbei ein Verpressen des Rohres von aussen her zusätzlich zum aufweitenden Einführen des Stutzens erfolgt.

## Patentansprüche

1. Verfahren zum Befestigen eines Rohres (1) an einem Bauteil (2), wobei das Bauteil einen zur Einführung in dass Rohr bestimmten Stutzen (3) aufweist, der zum Innendurchmesser des Rohres ein Übermass aufweist, **dadurch gekennzeichnet, dass** ein Greifglied (4;24;44) aussen permanent auf dem Rohr angeordnet wird und der Stutzen (3) durch eine am Bauteil (2) und am Greifglied (4;24;44) angreifende Kraft (K1,K2) in das Rohr eingepresst wird.

2. Verfahren nach Anspruch 1, **dadurch gekennzeichnet, dass** das Greifglied (24;44) zusätzlich als Pressglied ausgebildet ist, das nach dem Einpressen des Stutzens bei weiterer Kraftausübung eine radiale Verpressung des Rohres von aussen her bewirkt.

3. Verfahren nach Anspruch 1 oder 2, **dadurch gekennzeichnet, dass** das Greifglied (4;24;44) zum Greifen des Rohres sich in das Rohrmaterial eingrabende Arretiermittel (8;28;38;48) aufweist.

4. Verfahren nach einem der Ansprüche 1 bis 3, **dadurch gekennzeichnet, dass** das Übermass des Stutzens (3) von mindestens einer Ausformung (9,10,11,12) der Stutzenmantelfläche (3') gebildet wird.

5. Verfahren nach einem der Ansprüche 1 bis 4, **dadurch gekennzeichnet, dass** das Übermass im wesentlichen von der gesamten Mantelfläche (3') des Stutzens gebildet wird.

6. Verbindungsanordnung für ein Rohr (1), umfassend ein an dem Rohr (1) zu befestigendes Bauteil (2) mit einem zur Einführung in das Rohr (1) bestimmten Stutzen (3) und einem aussen über dem Rohr (1) im Bereich des Stutzens (3) permanent anzuordnenden Greifglied, wobei das Greifglied (4;24;44) mit zum Eingriff in das Rohrmaterial bestimmten Arretiermitteln (8;28;38;48) versehen ist, die derart ausgebildet sind, dass sie ein Festhalten des Rohres im Greifglied beim Einpressen eines mit Übermass versehenen Stutzens in das Rohr bewirken.

7. Verbindungsanordnung nach Anspruch 6, **dadurch gekennzeichnet, dass** das Greifglied mindestens eine die Arretiermittel (8;28;38;48) tragende Hülse (6;26;27;41) und mindestens einen die Hülse übergreifenden Ring (5;25;45) aufweist, wobei Ring und Hülse aneinander angreifende Haltemittel (19,19';39,39';49,49') aufweisen, die Hülse und Ring beim Einpressen des Stutzens (3) in das Rohr mittels des Greifgliedes aneinander festhalten.

8. Verbindungsanordnung nach Anspruch 6, **dadurch gekennzeichnet, dass** die Haltemittel (39,39'; 49,49') derart ausgestaltet sind, dass diese durch eine die Einpresskraft für den Stutzen übersteigende Kraft lösbar sind, und dass Ring (25;45) und Hülse (26;41) derart ausgestaltet sind, dass nach dem Lösen der Ring derart über die Hülse schiebbar ist, dass diese dabei radial verpressbar ist.

9. Verbindungsanordnung nach einem der Ansprüche 6 bis 8, **dadurch gekennzeichnet, dass** die Hülse (6;27) mindestens einen Teil aus Metall mit in das Hülseninnere greifenden Federzungen (8;28) umfasst, welche derart angeordnet sind, dass ein in die Hülse eingeführtes Rohr darin arretiert wird.

10. Greifglied (4;24;44) für eine Verbindungsanordnung zur Befestigung eines Rohres (1) an einem Bauteil (2), wobei das Greifglied zum permanenten Aufsetzen auf das Rohrende bestimmt ist und mit zum Eingriff in das Rohrmaterial bestimmten Arretiermitteln (8;28;38; 48) versehen ist, die derart ausgestaltet sind, dass das auf das Rohr aufgeschobene Greifglied auf diesem arretiert ist.

11. Greifglied nach Anspruch 10, **dadurch gekennzeichnet, dass** dieses aus mindestens einem Ring (5;25;45) und mindestens einer darin koaxial angeordneten Hülse (6;26;27;41) gebildet ist, welche Hülse Arretiermittel (8;28;38;48) für das Rohr trägt.

12. Greifglied nach Anspruch 11, **dadurch gekennzeichnet, dass** Ring und Hülse über Verbindungsmittel (19,19';39,39';49,49') verbunden sind, welche zu einer Kraftübertragung in Längsrichtung des Greifgliedes von Ring auf Hülse ausgestaltet sind.

13. Greifglied nach Anspruch 12, **dadurch gekennzeichnet, dass** die Verbindungsmittel (39,39';49, 49') zur Lösung der Verbindung bei einer eine vorbestimmte Kraft in Längsrichtung übersteigenden Kraft ausgestaltet sind.

14. Greifglied nach Anspruch 13, **dadurch gekennzeichnet, dass** Ring und Hülse derart ausgestaltet sind, dass bei gelöster Verbindung eine Krafteinwirkung auf den Ring in Längsrichtung des Greifgliedes eine radiale Presskraft auf die Hülse erzeugt.
